# EUROPÄISCHE PATENTSCHRIFT

(11) **EP 2 729 364 B1**
(45) Veröffentlichungstag und Bekanntmachung des Hinweises auf die Patenterteilung: **09.11.2016**
(21) Anmeldenummer: 12728392.7
(22) Anmeldetag: 01.06.2012
(51) Int. Cl.: B60N 2/46, B64D 11/06

(54) **ARMLEHNENVORRICHTUNG FÜR EINEN FAHRZEUGSITZ**
ARMREST DEVICE FOR A VEHICLE SEAT
DISPOSITIF ACCOUDOIR POUR SIÈGE DE VÉHICULE

(30) Priorität: 09.07.2011 DE 102011107044
(43) Veröffentlichungstag der Anmeldung: 14.05.2014
(73) Patentinhaber: Recaro Aircraft Seating GmbH & Co. KG, 74523 Schwäbisch Hall (DE)
(72) Erfinder: ITZINGER, Andreas, 74545 Michelfeld (DE)
(74) Vertreter: Daub, Thomas
(86) Internationale Anmeldenummer: PCT/EP2012/002331
(87) Internationale Veröffentlichungsnummer: WO 2013/007332

(56) Entgegenhaltungen:
- DE-A1- 3 110 515
- FR-A1- 2 315 241
- US-A- 4 657 305

## Beschreibung

### Stand der Technik

Die Erfindung geht aus von einer Sitzbefestigungsvorrichtung nach dem Oberbegriff des Patentanspruchs 1.

Ein Stand der Technik ist durch US 4,657,305 gegeben.

Es ist bereits eine Armlehnenvorrichtung für einen Fahrzeugsitz, insbesondere für einen Fluggastsitz, mit einer Armlehne, die über eine Gelenkeinheit mit einem Sitzbauteil um eine Schwenkachse schwenkbar verbunden ist, bekannt. In einigen Fällen ist es nicht gewünscht oder gestattet, dass Passagiere eine zum Gang hin angeordnete Armlehne verstellen, so dass die Gelenkeinheit dauerhaft verriegelt ist. Für eine in ihrer Bewegung eingeschränkte Person ist damit jedoch der Zugang zum Sitzplatz erschwert oder sogar unmöglich.

Der Erfindung liegt demzufolge insbesondere die Aufgabe zugrunde, eine Armlehnenvorrichtung mit einer kompakten und sicheren Schwenklagerung der Armlehne bereitzustellen, die auf einfache Weise von einem geschulten Personal verriegelt und entriegelt werden kann.

Diese Aufgabe wird durch eine Sitzbefestigungsvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Armlehnenvorrichtung für einen Fahrzeugsitz, insbesondere für einen Fluggastsitz, mit einer Armlehne, die über eine Gelenkeinheit mit einem Sitzbauteil um eine Schwenkachse schwenkbar verbunden ist.

Es wird vorgeschlagen, dass die Armlehnenvorrichtung eine Verriegelungseinheit zur Verriegelung der Gelenkeinheit umfasst, die eine Lagereinheit aufweist, die zur beweglichen Lagerung der Armlehne vorgesehen ist, wodurch eine besonders kompakte und sichere Schwenklagerung der Armlehne erreicht werden kann. Unter einer "Armlehne" soll in diesem Zusammenhang insbesondere ein Armauflagekörper verstanden werden, der dazu vorgesehen ist, eine Auflagefläche für einen Arm eines Benutzers bereitzustellen. Unter einer "Getenkeinheit" soll in diesem Zusammenhang insbesondere eine Einheit verstanden werden, die dazu vorgesehen ist, die Armlehne relativ zu einem Sitzbauteil schwenkbar zu lagern. Unter einem "Sitzbauteil" soll in diesem Zusammenhang insbesondere ein Bauteil eines Sitzes, wie insbesondere eine Rückenlehne, eine Umhausung der Rückenlehne und/oder ein Sitzgestell, verstanden werden. Unter einer "Verriegelungseinheit" soll insbesondere eine Einheit verstanden werden, welche wahlweise zumindest zwei Bauteile in wenigstens einer Richtung relativ zueinander örtlich fixiert. Insbesondere verriegelt die Verriegelungseinheit die Gelenkeinheit und vermeidet somit ein Schwenken der Armlehne relativ zum Sitzbauteil. Unter einer lagereinheit" soll in diesem Zusammenhang insbesondere eine Einheit verstanden werden, die zumindest zwei Bauteile beweglich zueinander lagert.

In einer weiteren Ausgestaltung wird vorgeschlagen, dass die Lagereinheit zumindest ein Linearführungselement umfasst, das dazu vorgesehen ist, die Armlehne relativ zum Sitzbauteil translatorisch zu führen, wodurch die Gelenkeinheit besonders einfach mechanisch ver- bzw. entriegelt werden kann. Ferner kann die Gelenkeinheit durch das Linearführungselement in einem verriegelten Zustand nach außen hin vorteilhaft von der Armlehne abgedeckt werden. Unter einem Linearführungselement soll in diesem Zusammenhang insbesondere ein Element verstanden werden, das dazu vorgesehen ist, zwei Bauteile relativ zueinander in einer linearen Bewegung zu führen. Vorteilhaft ist das Linearführungselement dazu vorgesehen, die zwei Bauteile relativ zueinander in einer rein linearen Bewegung zu führen.

Ferner wird vorgeschlagen, dass das zumindest eine Linearführungselement einstückig mit der Armlehne ausgebildet ist, wodurch vorteilhaft Produktionskosten und Gewicht eingespart werden können. Unter einstöckig" soll in diesem Zusammenhang insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Erfindungsgemäß ist vorgesehen, dass die Verriegelungseinheit ein Sperrelement umfasst, das dazu vorgesehen ist, in zumindest einem Betriebszustand eine Translation der Armlehne relativ zum Sitzbauteil zu vermeiden, wodurch eine besonders hohe Betriebssicherheit erreicht werden kann. Unter einem "Sperrelement" soll in diesem Zusammenhang insbesondere ein Element verstanden werden, das dazu vorgesehen ist, eine Betätigung der Verriegelungseinheit zu vermeiden.

Ist das Sperrelement um eine Schwenkachse schwenkbar gelagert, kann das Sperrelement besonders stabil bei gleichzeitig einfacher Bewegungsmechanik ausgebildet werden.

Weist die Verriegelungseinheit ein Federelement auf, das dazu vorgesehen ist, das Sperrelement selbstständig in eine Verriegelungsposition zu bewegen, kann eine Betriebssicherheit weiter erhöht und ein ungewolltes Entriegeln vermieden werden. Unter einem "Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt.

In einer weiteren Ausgestaltung der Erfindung wird vorgeschlagen, dass die Verriegelungseinheit ein Betätigungselement umfasst, das dazu vorgesehen ist, das Sperrelement aus einer Verriegelungsposition auszulenken, wodurch eine besonders hohe Benutzerfreundlichkeit erreicht werden kann. Unter einem "Betätigungselement" soll in diesem Zusammenhang insbesondere ein Element verstanden werden, das dazu vorgesehen ist, von einem Benutzer zur Veränderung eines Verriegelungszustands der Verriegelungseinheit betätigt zu werden. Bevorzugt umfasst das Betätigungselement einen Druckknopf.

Ferner wird vorgeschlagen, dass die Armlehne um zumindest 90° auslenkbar ist, wodurch ein besonders großer hindernisfreier Durchgangsbereich erreicht werden kann. Unter einem "Durchgangsbereich" soll in diesem Zusammenhang insbesondere ein Bereich verstanden werden, der dazu vorgesehen ist, einen Durchgang von einem Kabinengang zu einem Fluggastsitz bereitzustellen.

Eine Benutzerfreundlichkeit kann auf einfache Weise weiter erhöht werden, wenn die Gelenkeinheit ein Reibschlusselement umfasst, das dazu vorgesehen ist, die Armlehne durch ein Anzugsmoment in einer bestimmten Position zu halten.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht eines Fluggastsitzes mit einer erfindungsgemäßen Armlehnenvorrichtung,
- Fig. 2: eine Seitenansicht der Armlehnenvorrichtung in einem verriegelten Zustand,
- Fig. 3: eine Seitenansicht der Armlehnenvorrichtung in einem entriegelten Zustand und
- Fig. 4: eine Seitenansicht der Armlehnenvorrichtung in einem geöffneten Zustand.

### Beschreibung des Ausführungsbeispiels

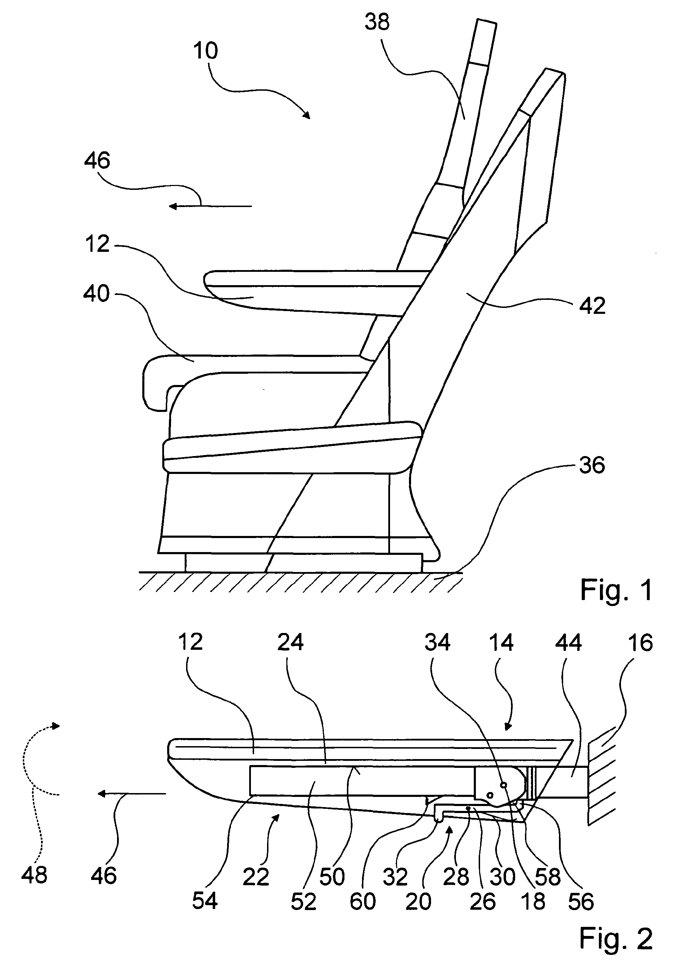

In Figur 1 ist ein Fahrzeugsitz dargestellt, der als Fluggastsitz 10 ausgebildet ist. Am Fluggastsitz 10 ist eine Armlehnenvorrichtung mit einer Armlehne 12 angeordnet, die als Armauflagekörper für einen Passagier dient. Die Armlehne 12 grenzt ferner einen Sitzbereich von einem Kabinengang teilweise ab und versperrt teilweise einen Durchgangsbereich, der zwischen dem Sitzbereich und dem Kabinengang angeordnet ist. Der Fluggastsitz 10 ist auf einem Kabinenboden 36 aufgeständert. Der Fluggastsitz 10 weist eine Rückenlehne 38 auf, die schwenkbar zu einem Sitzboden 40 gelagert und teilweise in eine am Fluggastsitz 10 rückwärtig angeordnete, schalenförmige Umhausung 42 bewegbar ist.

In Figur 2 ist die Armlehnenvorrichtung in einer Detailansicht gezeigt. Eine Seitenwand der Armlehne 12 ist aus Gründen der Übersichtlichkeit nicht dargestellt, wodurch eine innerhalb der Armlehne 12 befindliche mechanische Anordnung sichtbar ist. Die Armlehne 12 ist über eine Gelenkeinheit 14 mit einem Sitzbauteil 16 um eine Schwenkachse 18 schwenkbar verbunden. Das Sitzbauteil 16 ist im gezeigten Ausführungsbeispiel von der Umhausung 42 gebildet. Es ist in diesem Zusammenhang jedoch auch denkbar, dass das Sitzbauteil 16 von der Rückenlehne 38, dem Sitzboden 40 oder von einem Sitzgestell des Fluggastsitzes 10 gebildet ist. Die Gelenkeinheit 14 ist mit dem Sitzbauteil 16 über ein flaches Verbindungselement 44 verbunden, welches zwischen der Umhausung 42 und der Rückenlehne 38 angeordnet ist. Dadurch, dass das Verbindungselement 44 die Gelenkeinheit 14 von der Umhausung 42 beabstandet, ist ein Spaltmaß zwischen der Rückenlehne 38 und der Umhausung 42 besonders gering. Ein Verletzungsrisiko für einen Passagier durch Einklemmen von Körperteilen zwischen der Umhausung 42 und der Rückenlehne 38 bei einem Schwenkvorgang der Armlehne 12 kann somit minimiert werden.

Die Armlehnenvorrichtung umfasst eine Verriegelungseinheit 20, die eine Lagereinheit 22 aufweist, die eine bewegliche Lagerung der Armlehne 12 bereitstellt. Die Lagereinheit 22 umfasst ein Linearführungselement 24, welches die Armlehne 12 relativ zum Sitzbauteil 16 translatorisch führt. Eine Bewegung der Armlehne 12 relativ zum Sitzbauteil 16 erfolgt dabei parallel zu einer Sitzrichtung 46. Die Bewegung der Armlehne 12 relativ zum Sitzbauteil 16 führt zu einer Zustandsänderung der Verriegelungseinheit 20. Eine Bewegung der Armlehne 12 in Sitzrichtung 46, d.h. von dem Sitzbauteil 16 weg, führt zu einem Entriegelungszustand der Verriegelungseinheit 20. Im Entriegelungszustand ist die Verriegelungseinheit 20 unwirksam. Ein Schwenken der Armlehne 12 um die Schwenkachse 18 ist im Entriegelungszustand möglich. Eine Bewegung der Armlehne 12 entgegen der Sitzrichtung 46, d.h. zum Sitzbauteil 16 hin, führt zu einem Verriegelungszustand der Verriegelungseinheit 20. Im Verriegelungszustand ist die Verriegelungseinheit 20 wirksam. Ein Schwenken der Armlehne 12 um die Schwenkachse 18 ist im Verriegelungszustand unmöglich.

Die Sitzrichtung 46 entspricht in einer normalen Sitzhaltung mit parallelen Beinen der Richtung der Erstreckung der Oberschenkel des Passagiers vom Gesäß bis zum Kniebereich. Die Sitzrichtung 46 ist insbesondere senkrecht zu einer von der Rückenlehne 38 gebildeten Rückenlehnenfläche in einer aufrechten Position der Rückenlehne 38 ausgerichtet und führt von der Rückenlehnenfläche weg. Eine vordere Kante des Sitzbodens 40 ist senkrecht zur Sitzrichtung 46 und parallel zum Kabinenboden 36 ausgerichtet, auf welchem der Fluggastsitz 10 angeordnet ist. Es ist in diesem Zusammenhang jedoch auch denkbar, die Armlehne 12 anders zu lagern, so dass insbesondere eine quer zur Sitzrichtung 46 verlaufende Bewegung und/oder eine Rotationsbewegung in eine Rotationsrichtung 48 zu einer Zustandsänderung der Verriegelungseinheit 20 führt. Das Linearführungselement 24 ist einstückig mit der Armlehne 12 ausgebildet und weist eine ebene Gleitfläche 50 auf, an welcher eine Führungsschiene 52 der Lagereinheit 22 anliegt. Die Führungsschiene 52 ist in einen Führungskanal 54 der Armlehne 12 eingeschoben.

Um ein unbeabsichtigtes oder unberechtigtes Verschieben der Armlehne 12 zu vermeiden, weist die Verriegelungseinheit 20 ein Sperrelement 26 auf, welches eine Betätigung der Verriegelungseinheit 20 in einer Verriegelungsposition, d.h. in einem gesperrten Zustand, vermeidet. Das Sperrelement 26 ist von einem länglichen Metallstück gebildet und innerhalb der Armlehne 12 angeordnet. An einem freien Ende des Sperrelements 26 ist ein als Druckknopf ausgebildetes Betätigungselement 32 angeordnet, das aus der Armlehne 12 an einer Unterseite austritt. Das Sperrelement 26 ist um eine Schwenkachse 28 schwenkbar an der Armlehne 12 gelagert. An einem freien, dem Betätigungselement 32 gegenüberliegenden Ende des Sperrelements 26 ist eine Rastnase 56 angeformt, die im gesperrten Zustand ein Sperrglied 58 hintergreift, welches fest mit dem Verbindungselement 44 verbunden ist. Die Armlehne 12 ist somit im gesperrten Zustand über das Sperrelement 26 mit dem Verbindungselement 44 verbunden.

Die Verriegelungseinheit 20 weist ferner ein Federelement 30 auf, das das Sperrelement 26 selbstständig in die Verriegelungsposition bewegt. Das Federelement 30 ist als Blattfeder ausgebildet. Es ist in diesem Zusammenhang jedoch auch denkbar, andere, dem Fachmann als sinnvoll erscheinende Federelemente einzusetzen, wie beispielsweise Schraubenfedern, Torsionsfedern, Tellerfedern und/oder Gasdruckfedern. Das Federelement 30 ist am Sperrelement 26 angebracht und liegt mit einem freien Ende an einer unteren Außenwand der Armlehne 12 an. Das Federelement 30 übt einen Druck der Rastnase 56 auf das Sperrglied 58 bzw. auf das Verbindungselement 44 aus. Ein Drücken des Betätigungselements 32 erfolgt entgegen einer Spannkraft des Federelements 30.

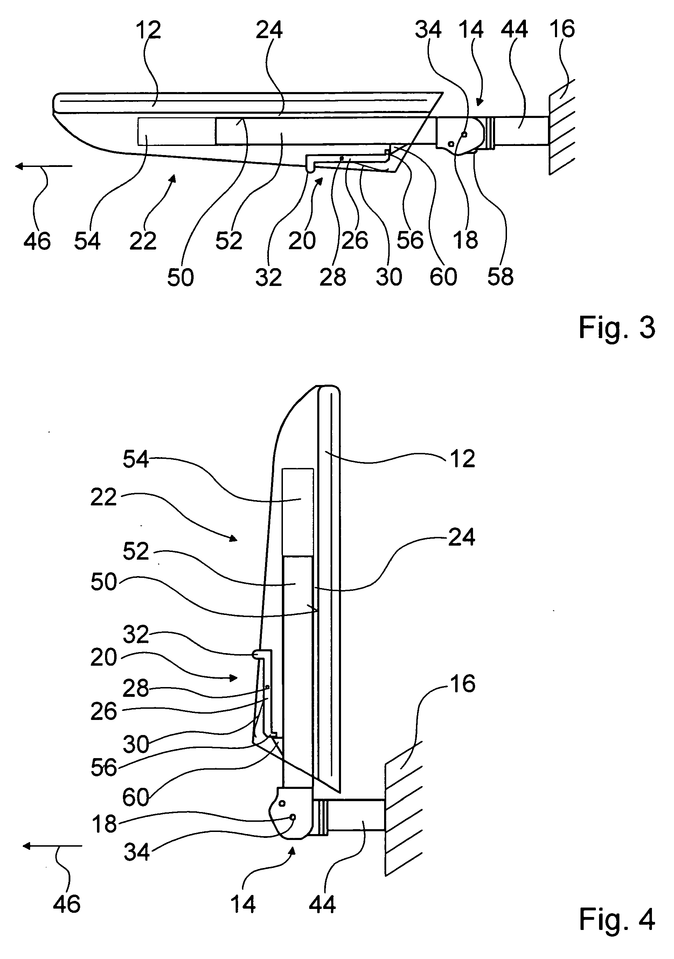

In den Figuren 3 und 4 ist ein Schwenkvorgang der Armlehne 12 gezeigt. In einem ersten Schritt wird das Betätigungselement 32 in Richtung der Armlehne 12 gedrückt. Dabei schwenkt das Sperrelement 26 um die Schwenkachse 28 und drückt das Federelement 30 weiter zusammen. Die Rastnase 56 bewegt sich von dem Verbindungselement 44 weg, wobei das Sperrelement 26 vom Sperrglied 58 gelöst und damit freigegeben ist. In einem zweiten Schritt wird die Armlehne 12 in Sitzrichtung 46 translatorisch aus einer Ausgangslage verschoben (Figur 3). Die Armlehne 12 wird dabei von der Lagereinheit 22 geführt. Die Armlehne 12 liegt nach dem Verschieben nicht länger an der Gelenkeinheit 14 an und gibt diese frei. Um ein unbeabsichtigtes Zurückschieben der Armlehne 12 in die Ausgangslage zu vermeiden, ist ein zweites, widerhakenförmiges Sperrglied 60 an der Armlehne 12 angeordnet, über welches die Rastnase 56 gleitet. Bei Erreichen einer Endposition der Armlehne 12, d.h. wenn ein weiteres Vorschieben unmöglich ist, verrastet die Rastnase 56, in Sitzrichtung 46 betrachtet, hinter dem zweiten Sperrglied 60, wodurch ein Zurückschieben der Armlehne 12 in die Ausgangslage vermieden wird.

In einem letzten Schritt wird die Armlehne 12 aus einer Grundstellung über die freigegebene Gelenkeinheit 14 um die Schwenkachse 18 um 90° geschwenkt und steht schließlich senkrecht zum Sitzboden 40. Dabei bewegt sich ein freies Ende der Armlehne 12 vom Sitzboden 40 weg. Die Gelenkeinheit 14 umfasst ein Reibschlusselement 34, das koaxial zur Schwenkachse 18 angeordnet ist. Das Reibschlusselement 34 ist von einer Schraube gebildet. Durch ein Anzugsmoment des Reibschlusselements 34, um welches die Armlehne 12 schwenkt, wird eine Reibung zwischen dem Verbindungselement 44 und der Armlehne 12 erzeugt, welche ein Zurückfallen der Armlehne 12 aus einem hochgeklappten Zustand vermeidet. Die Armlehne 12 wird somit durch das Anzugsmoment in einer bestimmten Position gehalten.

Um die Armlehne 12 zurück in die Ausgangslage zu bringen, wird die Armlehne 12 zunächst zurück in die Grundstellung geschwenkt. Anschließend wird durch Drücken des Betätigungselements 32 das Sperrelement 26 vom zweiten Sperrglied 60 gelöst. Die Armlehne 12 wird nun entgegen der Sitzrichtung 46 bis in die Ausgangslage bewegt. Die Gelenkeinheit 14 kommt somit in Anlage mit der Armlehne 12 und ist innerhalb des Führungskanals 54 für einen Benutzer unsichtbar angeordnet.

**Bezugszeichen**

| | | | |
|---|---|---|---|
| 10 | Fluggastsitz | 56 | Rastnase |
| 12 | Armlehne | 58 | Sperrglied |
| 14 | Gelenkeinheit | 60 | Sperrglied |
| 16 | Sitzbauteil | | |
| 18 | Schwenkachse | | |
| 20 | Verriegelungseinheit | | |
| 22 | Lagereinheit | | |
| 24 | Linearführungselement | | |
| 26 | Sperrelement | | |
| 28 | Schwenkachse | | |
| 30 | Federelement | | |
| 32 | Betätigungselement | | |
| 34 | Reibschlusselement | | |
| 36 | Kabinenboden | | |
| 38 | Rückenlehne | | |
| 40 | Sitzboden | | |
| 42 | Umhausung | | |
| 44 | Verbindungselement | | |
| 46 | Sitzrichtung | | |
| 48 | Rotationsrichtung | | |
| 50 | Gleitfläche | | |
| 52 | Führungsschiene | | |
| 54 | Führungskanal | | |

## Patentansprüche

1. Armlehnenvorrichtung für einen Fahrzeugsitz, insbesondere für einen Fluggastsitz (10), mit einer Armlehne (12), die über eine Gelenkeinheit (14) mit einem Sitzbauteil (16) um eine Schwenkachse (18) schwenkbar verbunden ist, mit einer Verriegelungseinheit (20) zur Verriegelung der Gelenkeinheit (14), die eine Lagereinheit (22) aufweist, die zur beweglichen Lagerung der Armlehne (12) vorgesehen ist, **dadurch gekennzeichnet, dass** die Verriegelungseinheit (20) ein Sperrelement (26) umfasst, das dazu vorgesehen ist, in zumindest einem Betriebszustand eine Translation der Armlehne (12) relativ zum Sitzbauteil (16) zu vermeiden.

2. Armlehnenvorrichtung nach Anspruch 1, **dadurch gekennzeichnet, dass** die Lagereinheit (22) zumindest ein Linearführungselement (24) umfasst, das dazu vorgesehen ist, die Armlehne (12) relativ zum Sitzbauteil (16) translatorisch zu führen.

3. Armlehnenvorrichtung nach Anspruch 1 oder 2, **dadurch gekennzeichnet, dass** das zumindest eine Linearführungselement (24) einstückig mit der Armlehne (12) ausgebildet ist.

4. Armlehnenvorrichtung nach einem der vorhergehenden Ansprüche, **dadurch gekennzeichnet, dass** das Sperrelement (26) um eine Schwenkachse (28) schwenkbar gelagert ist.

5. Armlehnenvorrichtung nach einem der vorhergehenden Ansprüche, **dadurch gekennzeichnet, dass** die Verriegelungseinheit (20) ein Federelement (30) aufweist, das dazu vorgesehen ist, das Sperrelement (26) selbstständig in eine Verriegelungsposition zu bewegen.

6. Armlehnenvorrichtung nach einem der vorhergehenden Ansprüche, **dadurch gekennzeichnet, dass** die Verriegelungseinheit (20) ein Betätigungselement (32) umfasst, das dazu vorgesehen ist, das Sperrelement (26) aus einer Verriegelungsposition auszulenken.

7. Armlehnenvorrichtung nach einem der vorhergehenden Ansprüche, **dadurch gekennzeichnet, dass** die Armlehne (12) um zumindest 90° auslenkbar ist.

8. Armlehnenvorrichtung nach einem der vorhergehenden Ansprüche, **dadurch gekennzeichnet, dass** die Gelenkeinheit (14) ein Reibschlusselement (34) umfasst, das dazu vorgesehen ist, die Armlehne (12) in einer bestimmten Position zu halten.

9. System mit einer Armlehnenvorrichtung nach einem der vorhergehenden Ansprüche und mit einem Fluggastsitz (10).

## Claims

1. Armrest device for a vehicle seat, in particular for a flight passenger seat (10), with an armrest (12) that is connected to a seat component (16) via an articulation unit (14) pivotably around a pivot axis (18), with a locking unit (20) for locking the articulation unit (14), comprising a support unit (22) provided for movably supporting the armrest (12), **characterised in that** the locking unit (20) comprises a blocking element (26) provided for avoiding, in at least one operating state, a translation of the armrest (12) with respect to the seat component (16).

2. Armrest device as claimed in claim 1, **characterised in that** the support unit (22) comprises at least one linear guiding element (24) that is provided for translationally guiding the armrest (12) with respect to the seat component (16).

3. Armrest device as claimed in claim 1 or 2, **characterised in that** the at least one linear guiding element (24) is embodied integrally with the armrest (12).

4. Armrest device as claimed in one of the preceding claims, **characterised in that** the blocking element (26) is supported pivotably around a pivot axis (28).

5. Armrest device as claimed in one of the preceding claims, **characterised in that** the locking unit (20) comprises a spring element (30) that is provided for automatically moving the blocking element (26) into a locking position.

6. Armrest device as claimed in one of the preceding claims, **characterised in that** the locking unit (20) comprises an actuation element (32) that is provided for deflecting the blocking element (26) from a locking position.

7. Armrest device as claimed in one of the preceding claims, **characterised in that** the armrest (12) is pivotable by at least 90°.

8. Armrest device as claimed in one of the preceding claims, **characterised in that** the articulation unit (14) comprises a friction-lock element (34) that is provided for holding the armrest (12) in a defined position.

9. System with an armrest device as claimed in one of the preceding claims and with a flight passenger seat (10).

## Revendications

1. Dispositif accoudoir pour un siège de véhicule, notamment un siège passager d'avion (10), avec un accoudoir (12) raccordé à un élément structurel de siège (16) via une unité jointure (14) pivotablement autour d'un axe de pivotement (18), avec une unité de verrouillage (20) pour verrouiller l'unité jointure (14), l'unité de verrouillage (20) comportant une unité de support (22) prévue au support mobile de l'accoudoir (12), **caractérisé en ce que** l'unité de verrouillage (20) comporte un élément de blocage (26) prévu à éviter, dans au moins un état opératif, une translation de l'accoudoir (12) relativement à l'élément structurel de siège (16).

2. Dispositif accoudoir selon la revendication 1, **caractérisé en ce que** l'unité de support (22) comporte au moins un élément de guidance linéaire (24) prévu à guider l'accoudoir (12) de façon translationelle relativement à l'élément structurel de siège (16).

3. Dispositif accoudoir selon la revendication 1 ou 2, **caractérisé en ce que** l'au moins un élément de guidance linéaire (24) est implémenté intégralement avec l'accoudoir (12).

4. Dispositif accoudoir selon l'une quelconque des revendications précédentes, **caractérisé en ce que** l'élément de blocage (26) est supporté pivotablement autour d'un axe de pivotement (28).

5. Dispositif accoudoir selon l'une quelconque des revendications précédentes, **caractérisé en ce que** l'unité de verrouillage (20) comporte un élément résilient (30) prévu à mouvoir automatiquement l'élément de verrouillage (26) dans une position de verrouillage.

6. Dispositif accoudoir selon l'une quelconque des revendications précédentes, **caractérisé en ce que** l'unité de verrouillage (20) comporte un élément d'actuation (32) prévu à dévier l'élément de blocage (26) d'une position de verrouillage.

7. Dispositif accoudoir selon l'une quelconque des revendications précédentes, **caractérisé en ce que** l'accoudoir (12) peut être dévié par au moins 90°.

8. Dispositif accoudoir selon l'une quelconque des revendications précédentes, **caractérisé en ce que** l'unité jointure (14) comporte un élément de raccordement par friction (34) prévu à tenir l'accoudoir (12) dans une position définie.

9. Système avec un dispositif accoudoir selon l'une quelconque des revendications précédentes et avec un siège passager d'avion (10).
